# EUROPEAN PATENT SPECIFICATION

(11) **EP 4 103 492 B1**
(45) Date of publication and mention of the grant of the patent: **08.10.2025**
(21) Application number: 21716023.3
(22) Date of filing: 11.03.2021
(51) Int. Cl.: B65D 90/00, B60P 7/08

(54) **LOAD-SECUREMENT PROCESS AND DEVICE**
LASTSICHERUNGSVERFAHREN UND VORRICHTUNG
PROCÉDÉ ET DISPOSITIF D'IMMOBILISATION DE CHARGE

(30) Priority: 16.03.2020 US 202062990126 P; 10.03.2021 US 202117197906
(43) Date of publication of application: 21.12.2022
(73) Proprietor: Signode Industrial Group LLC, Tampa, FL 33637 (US)
(72) Inventor: MARSHALL, Dwight L., Charlotte, North Carolina 28278 (US); BAKER, Christopher W., Murfreesboro, Tennessee 37128 (US); SCHULTZ, Roger D., Plano, Texas 75093 (US); LININGER, Joseph E., Union Grove, Wisconsin 53182 (US); JARRELL, Diana, Evanston, Illinois 60202 (US)
(74) Representative: Bardehle Pagenberg Partnerschaft mbB Patentanwälte Rechtsanwälte
(86) International application number: PCT/US2021/021919
(87) International publication number: WO 2021/188358

(56) References cited:
- WO-A1-2014/154774
- CN-Y- 201 380 786
- FR-A5- 2 083 145
- US-A- 4 607 991

## Description

### Field

The present disclosure relates to load-securement devices and processes, and more specifically to load-securement devices and processes for securing loads in a shipping container.

### Background

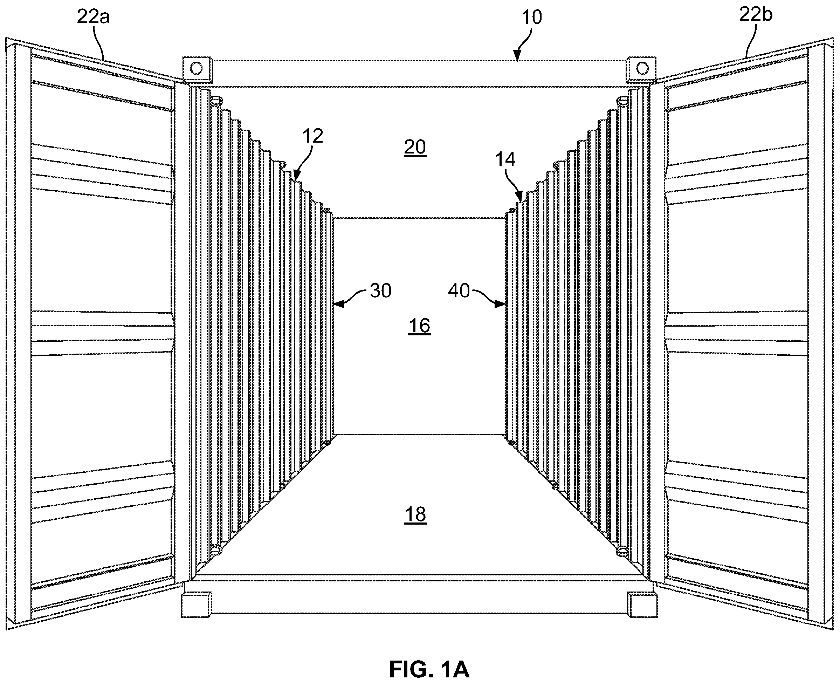

Companies use shipping containers to transport loads of goods over long distances via ship, rail, or truck. Shipping containers are large, usually metal vessels used to house and transport products for intermodal rail, nautical shipping, and over-the-road trucking applications. Figure 1A shows a known shipping container 10 that includes a first side wall 12, a second side wall 14 opposite the first side wall 12, a front end wall 16, a floor 18, a ceiling 20 opposite the floor 18, first and second rear doors 22a and 22b opposite the front end wall 16, a first front corner post 30, and a second front corner post 40. The first and second side walls 12 and 14 extend vertically between the floor 18 and the ceiling 20, and the floor 18 and the ceiling 20 extend horizontally between the first and second side walls 12 and 14. The front end wall 16 extends horizontally between the first and second side walls 12 and 14 and extends vertically between the floor 18 and the ceiling 20. The first and second rear doors 22a and 22b collectively (when closed) extend horizontally between the first and second side walls 12 and 14 and individually extend vertically between the floor 18 and the ceiling 20. The first front corner post 30 extends vertically and joins the first side wall 12 and the front end wall 16 to form a first front corner of the shipping container 10. The second front corner post 40 extends vertically and joins the second side wall 14 and the front end wall 16 to form a second front corner of the shipping container 10. The front corner posts 30 and 40 are some of the strongest components of the shipping container 10.

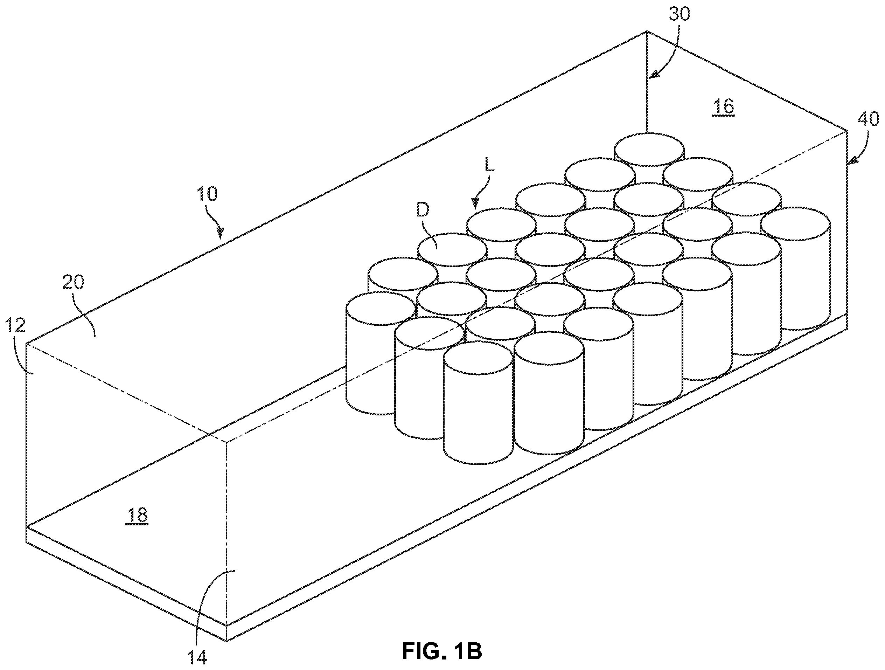

To ship a load of goods via a shipping container, the goods are first loaded into the interior of the shipping container, starting at the front end and moving toward the rear end. In many cases the goods don't completely fill the interior of the shipping container, which means voids exist within the load (i.e., between the goods themselves) and/or between the goods and the walls of the shipping container. If the voids aren't minimized and the load isn't secured against movement, the goods could shift during transit and collide with one another and the interior walls of the shipping container, damaging the goods and the shipping container. Figure 1B shows an example load L of drums D that have been loaded into the shipping container 10. Given the amount of empty space within the shipping container 10, unless secured the drums D will likely move during transit and collide with one another and the shipping container's walls.
CN 201 380 786 Y relates to a clamping mechanism of binding device, which belongs to the technical field of machinery. The clamping mechanism of binding device solves the problems that the clamping mechanism of an existing binding device has unreasonable structure design, low work stability and inconvenient use, and is easy to scratch or deform conveyances and the like. The clamping mechanism of binding device comprises two bended clamping bodies and a fixture block, wherein the middle portions of the two clamping bodies are hinged together, and the fixture block is arranged on the hinge portion of the two clamping bodies, one ends of the clamping bodies are working ends and are arranged in front of the fixture block, the other ends are arranged at the back of the fixture block, two end portions of the same clamping body are arranged on the same side of the fixture body, and the end portions of the two clamping bodies are respectively arranged on two sides of the fixture block, when the connecting ends of the two clamping bodies are closed under the function of a cerclage band, the two clamping bodies can be respectively detached towards two sides of the fixture block, and are close to the front end portion of the fixture block. The clamping mechanism of binding device has the advantages of reasonable structure design, high work stability and convenient use, and is not easy to scratch or deform conveyances and the like.
FR 2 083 145 A5 relates to a strap end fitting for hooking into an anchor rail, characterized by two flat shaped parts hooked, with reversed sides, into an end loop of a mooring strap, each having a strap passage opening widening into a recess, these parts being bent relative to each other and subjected to elastic tension by a tension spring hooked at each end to projections of each shaped part in the belt passage openings, the 10 shaped parts each having on their opposite outer sides a nose for hooking into the anchor rail.
WO 2014/154774 A1 concerns a method and device for securing cargo load in a container. In an embodiment of the current invention, such method comprises: providing a wall securement device comprising two or more apertures allowing the passage of securing means such as straps, which wall securement device is attached to an inner rigid structure of the wall; and lashing the cargo load with securing means by use of the wall securement device, whereby the wall securement device is located at the corner post of said container. In a second aspect, the invention provides for a wall securement device for securing loads.

### Summary

The present invention provides a load-securement process for securing a load in a shipping container according to claim 1 and a load-securement device attachable to a front corner post of a shipping container according to claim 8. Each load-securement device of the present invention includes a base and two wings each having a corner-engaging end. The wings are attached to the base and are movable relative to one another and to the base from a compact configuration in which a first distance separates the corner-engaging ends to a securement configuration in which a second greater distance separates the corner-engaging ends. Since the load-securement device is more compact when the wings are in the compact configuration (as compared to the securement configuration), it is easier to attach to a shipping container-and particularly to a front corner post of the shipping container-as compared to a similar load-securement device that has immovable wings fixed in the securement configuration. The base and the first and second wings are sized to fit entirely within the load-securement-device-receiving channel of the front corner post when the first and second wings are in the securement configuration.

An operator carries out a load-securement process of the present disclosure to secure a load in a shipping container using at least two load-securement devices. Specifically, the operator attaches individual load-securement devices to the two front corner posts of the shipping container. To do so, for each load-securement device, the operator inserts the load-securement device-at this point with the wings in the compact configuration-into a load-securement-device-receiving channel defined (in part) by the walls of its respective front corner post. The operator then manipulates the wings into the securement configuration so their corner-engaging ends separate and engage opposing interior corners of the front corner post. This engagement ensures the load-securement device stays in place during the remainder of the load-securement process. The operator attaches individual securement members (such as flexible straps) to each load-securement device and wraps the securement members around the load until their free ends meet. The operator attaches the free ends of the opposing securement members to one another (such as via a buckle) and tensions the securement members around the load using a tensioning tool. This pulls the load together and against the front end wall of the shipping container to secure it, completing the load-securement process.

### Brief Description of the Figures

Figure 1A is a perspective view of a shipping container.
Figure 1B is a perspective view of the shipping container of Figure 1A (shown in a simplified manner for clarity) loaded with a load of drums.
Figure 2 is a perspective view of one embodiment of the load-securement device of the present disclosure.
Figure 3 is an exploded perspective view of the load-securement device of Figure 2.
Figure 4A is a top plan view of a front corner post of the shipping container of Figures 1A and 1B.
Figure 4B is a perspective view of the front corner post of Figure 4A with its height truncated for clarity.
Figures 5A-5D are top plan views showing the load-securement device of Figure 2 being attached to the front corner post of Figure 4A and a securement member being attached to the load-securement device.
Figure 5E is a perspective view corresponding to Figure 5D.
Figures 5F-5I are perspective views of the shipping container of Figure 1A after a load-securement device of Figure 2 has been attached to each front corner post. The figures show a load being loaded into the shipping container and being secured using the load-securement devices and securement members.
Figure 6 is a perspective view of another embodiment of the load-securement device of the present disclosure.
Figure 7 is an exploded perspective view of the load-securement device of Figure 6.
Figure 8 is a perspective view of the load-securement device of Figure 6 after being attached to the front corner post of Figure 4A and after a securement member has been attached to it.
Figure 9 is a perspective view of another embodiment of the load-securement device of the present disclosure.
Figure 10 is an exploded perspective view of the load-securement device of Figure 9.
Figure 11 is a perspective view of the load-securement device of Figure 9 after being attached to the front corner post of Figure 4A and after a securement member has been attached to it.
Figure 12 is a perspective view of another embodiment of the load-securement device of the present disclosure.
Figure 13 is a cross-sectional front elevational view of the load-securement device of Figure 12 taken substantially along line 13-13 of Figure 12.
Figures 14A-14D are top plan views showing the load-securement device of Figure 12 being attached to the front corner post of Figure 4A and a securement member being attached to the load-securement device.
Figure 14E is a perspective view corresponding to Figure 14D.
Figure 15 is a perspective view of another embodiment of the load-securement device of the present disclosure.
Figure 16 is a cross-sectional front elevational view of the load-securement device of Figure 15 taken substantially along line 16-16 of Figure 15.
Figure 17 is a cross-sectional front elevational view of a portion of the load-securement device of Figure 15 taken substantially along line 16-16 of Figure 15.
Figure 18 is a perspective view of the load-securement device of Figure 15 after being attached to the front corner post of Figure 4A and after a securement member has been attached to it.

### Detailed Description

While the systems, devices, and processes described herein may be embodied in various forms, the drawings show and the specification describes certain exemplary and non-limiting embodiments. Not all of the components shown in the drawings and described in the specification may be required, and certain implementations may include additional, different, or fewer components. Variations in the arrangement and type of the components; the shapes, sizes, and materials of the components; and the manners of connections of the components may be made without departing from the scope of the claims. Unless otherwise indicated, any directions referred to in the specification reflect the orientations of the components shown in the corresponding drawings and do not limit the scope of the present disclosure. Further, terms that refer to mounting processes, such as mounted, connected, etc., are not intended to be limited to direct mounting processes but should be interpreted broadly to include indirect and operably mounted, connected, and like mounting processes. This specification is intended to be taken as a whole and interpreted in accordance with the principles of the present disclosure and as understood by one of ordinary skill in the art.

Various embodiments of the present disclosure provide load-securement devices and processes for securing loads in a shipping container. Generally, each load-securement device of the present disclosure includes a base and two wings each having a corner-engaging end. The wings are attached to the base and are movable relative to one another and to the base from a compact configuration in which a first distance separates the corner-engaging ends to a securement configuration in which a second greater distance separates the corner-engaging ends. Since the load-securement device is more compact when the wings are in the compact configuration (as compared to the securement configuration), it is easier to attach to a shipping container-and particularly to a front corner post of the shipping container-as compared to a similar load-securement device that has immovable wings fixed in the securement configuration.

An operator carries out a load-securement process of the present disclosure to secure a load in a shipping container using at least two load-securement devices. Specifically, the operator attaches individual load-securement devices to the two front corner posts of the shipping container. To do so, for each load-securement device, the operator inserts the load-securement device-at this point with the wings in the compact configuration-into a load-securement-device-receiving channel defined (in part) by the walls of its respective front corner post. The operator then manipulates the wings into the securement configuration so their corner-engaging ends separate and engage opposing interior corners of the front corner post. This engagement ensures the load-securement device stays in place during the remainder of the load-securement process. The operator attaches individual securement members (such as flexible straps) to each load-securement device and wraps the securement members around the load until their free ends meet. The operator attaches the free ends of the opposing securement members to one another (such as via a buckle) and tensions the securement members around the load using a tensioning tool. This pulls the load together and against the front end wall of the shipping container to secure it, completing the load-securement process.

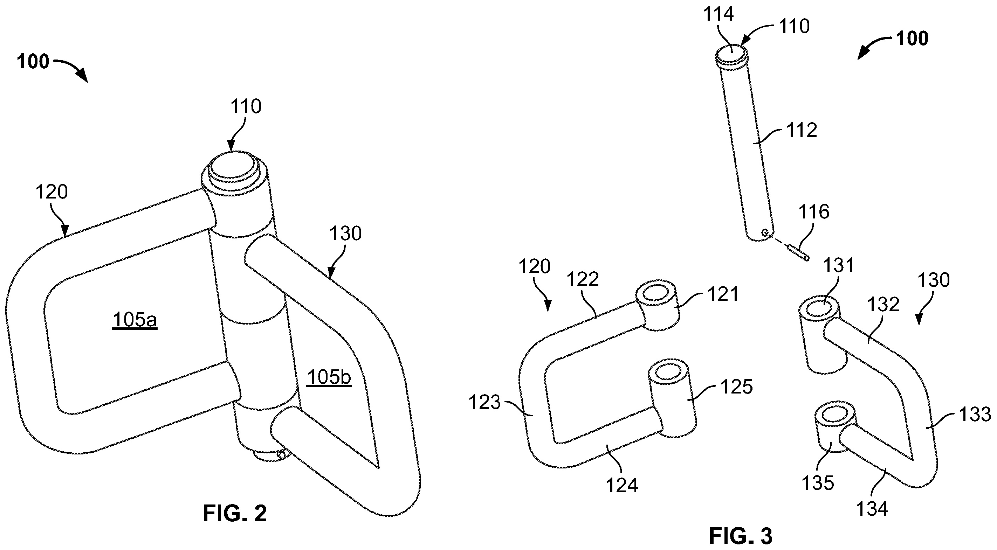

Figures 2, 3, and 5A-5E show one example embodiment of a load-securement device 100 of the present disclosure. The load-securement device 100 includes a base 110, first and second wings 120 and 130, and a retaining element 116. The base 110 and the first wing 120 define a first securement-member-receiving opening 105a bound on all sides, and the base 110 and the second wing 130 define a second securement-member-receiving opening 105b bound on all sides.

The base 110 includes a cylindrical body 112 and a disc-shaped head 114 at one end of the body 112. The head 114 has a larger diameter than the body 112. A bore (not labeled) sized to receive the retaining element 116 is defined at least partially through the body 112 near the end opposite the head 114.

The first wing 120 includes a tubular first mounting element 121 defining a first bore (not labeled) therethrough, a first arm 122 extending from the first mounting element 121, a corner-engaging element 123 extending transversely (here perpendicularly) from the first arm 122, a second arm 124 extending transversely (here perpendicularly) from the corner-engaging element 123, and a tubular second mounting element 125 defining a bore (not labeled) therethrough that is coaxial with the first bore defined by the first mounting element 121. The corner-engaging element 123 represents a corner-engaging end of the first wing 120.

In this example embodiment, the first arm 122, the corner-engaging element 123, and the second arm 124 are cylindrical, though they may be tubular or take any other suitable shape in other embodiments. In this example embodiment, the first arm 122, the corner-engaging element 123, and the second arm 124 are integrally formed, and the first and second mounting elements 121 and 125 are welded to the first arm 122 and the second arm 124, respectively. The first mounting element 121, the first arm 122, the corner-engaging element 123, the second arm 124, and the second mounting element 125 may be attached to one another in any suitable manner in other embodiments.

The second wing 130 includes a tubular first mounting element 131 defining a first bore (not labeled) therethrough, a first arm 132 extending from the first mounting element 131, a corner-engaging element 133 extending transversely (here perpendicularly) from the first arm 132, a second arm 134 extending transversely (here perpendicularly) from the corner-engaging element 133, and a tubular second mounting element 135 defining a bore (not labeled) therethrough that is coaxial with the first bore defined by the first mounting element 131. The corner-engaging element 133 represents a corner-engaging end of the second wing 130.

In this example embodiment, the first arm 132, the corner-engaging element 133, and the second arm 134 are cylindrical, though they may be tubular or take any other suitable shape in other embodiments. In this example embodiment, the first arm 132, the corner-engaging element 133, and the second arm 134 are integrally formed, and the first and second mounting elements 131 and 135 are welded to the first arm 132 and the second arm 134, respectively. The first mounting element 131, the first arm 132, the corner-engaging element 133, the second arm 134, and the second mounting element 135 may be attached to one another in any suitable manner in other embodiments.

The first and second wings 120 and 130 are movably (in this embodiment, pivotably) attached to the base 110 so they can freely pivot about the base 110 and relative to one another. More specifically, the body 112 of the base 110 is received in and extends through: the first bore defined by the first mounting element 121 of the first wing 120, the first bore defined by the first mounting element 131 of the second wing 130, the second bore defined by the second mounting element 125 of the first wing 120, and the second bore defined by the second mounting element 135 of the second wing 130. The retaining element 116 is received in the bore defined in the body 112 of the base 110 to retain the first and second wings 120 and 130 on the base 110. In this embodiment the retaining element 116 includes a pin, though it may include any suitable element in other embodiments.

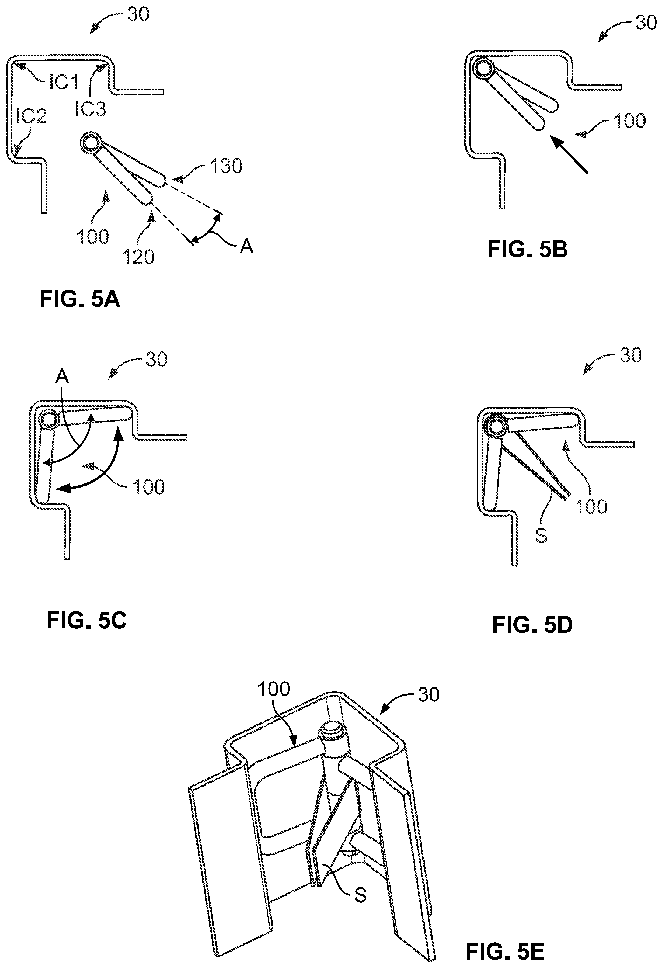

Due to their movable (in this embodiment, pivotable) attachment to the base 110, the first and second wings 120 and 130 are pivotable about the base 110 and relative to one another between a compact configuration and a securement configuration. In the compact configuration, which is shown in Figures 5A and 5B, the first and second wings 120 and 130 are positioned so a first distance separates their respective corner-engaging ends and so the angle A (Figure 5A) formed between the wings is a first angle that is less than 90 degrees. In this example embodiment, when in the compact configuration the distance between the corner-engaging ends of the first and second wings 120 and 130 (here, the corner-engaging elements 123 and 133) and the angle A are minimized. In the securement configuration, which is shown in Figures 5C-5E, the first and second wings 120 and 130 are positioned so a second distance greater than the first distance separates their respective corner-engaging ends and so the angle A (Figure 5C) is a second angle greater than the first angle (and approximately 90 degrees in this example embodiment).

When the first and second wings are in their compact configuration, the load-securement device has a compact profile that easily fits within the load-securement-device-receiving channel defined by a front corner post of a shipping container, which facilitates installation. The movable wings provide another benefit in that they can adapt to differences in front corner post geometry. For instance, if a front corner post is deformed or otherwise misshapen the wings can adapt and move further outward or inward as needed to confirm to the shape of that particular front corner post. If the wings were not movable, the load-securement device may be too large to fit (or would take significant effort to fit) or may be too small and impossible to use (not engage the corners).

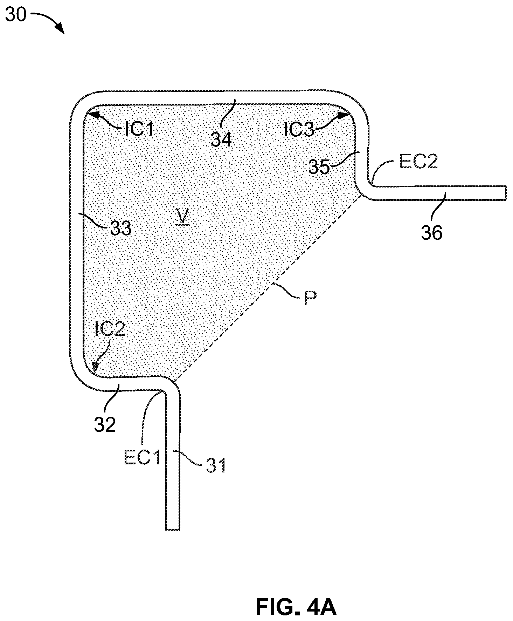

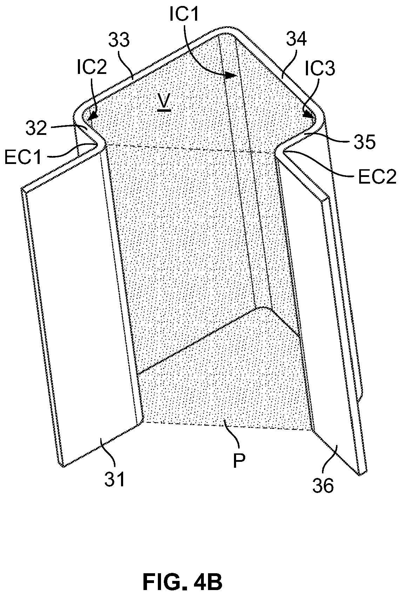

Figures 4A and 4B show the first front corner post 30 of the shipping container 10 (though other front corner posts may have different geometries). The first front corner post 30 includes first, second, third, fourth, fifth, and sixth corner-post walls 31-36. The third and fourth corner-post walls 33 and 34 are attached and oriented transversely (here, perpendicularly) to one another to form a first interior corner IC1. The second and fifth corner-post walls 32 and 35 are attached to and extend toward one another and transversely (here, perpendicularly) from the third and fourth corner-post walls 33 and 34, respectively, and to form opposing second and third interior corners IC2 and IC3, respectively. The first and sixth corner-post walls 31 and 36 are attached to and extend away from one another and transversely (here, perpendicularly) from the second and fifth corner-post walls 32 and 35, respectively, and to form first and second exterior corners EC1 and EC2, respectively. As shown in Figures 4A and 4B, the second, third, fourth, and fifth corner-post walls 32, 33, 34, and 35 and a boundary plane P extending between the first and second exterior corners EC1 and EC2 of the first corner post 30 define a load-securement-device-receiving channel V sized to receive a load-securement device for attachment to the first corner post 30. The second front corner post 40 is identical to the first front corner post 30 and is therefore not separately shown or described.

Figures 5A-5E show the load-securement device 100 being attached to the front corner post 30 and a securement member S being attached to the load-securement device 100. Turning to Figure 5A, the first and second wings 120 and 130 of the load-securement device 100 are initially in the compact configuration. As shown in Figure 5B, an operator moves the load-securement device 100 within (or partially within) the load-securement-device-receiving channel V defined by the front corner post 30 so the base 110 is adjacent the first interior corner IC1. As shown in Figure 5C, the operator manipulates the first and second wings 120 and 130 into the securement configuration by separating their respective corner-engaging ends until they engage the second and third interior corners IC2 and IC3 of the front corner post 30. This engagement retains the load-securement device 100 in place as the operator attaches the securement member S to the load-securement device 100. Specifically, the operator threads an end of the securement member S through the first securement-member-receiving opening 105a, around the base 110 and the mounting elements 121, 125, 131, and 135 of the first and second wings 120 and 130 that are mounted to the base 110, and back through the second securement-member-receiving opening 105b. In this embodiment the securement member S includes a woven polyester strap, though it may include any other suitable component in other embodiments. Figures 5D and 5E show the load-securement device 100 with the securement member S attached to it.

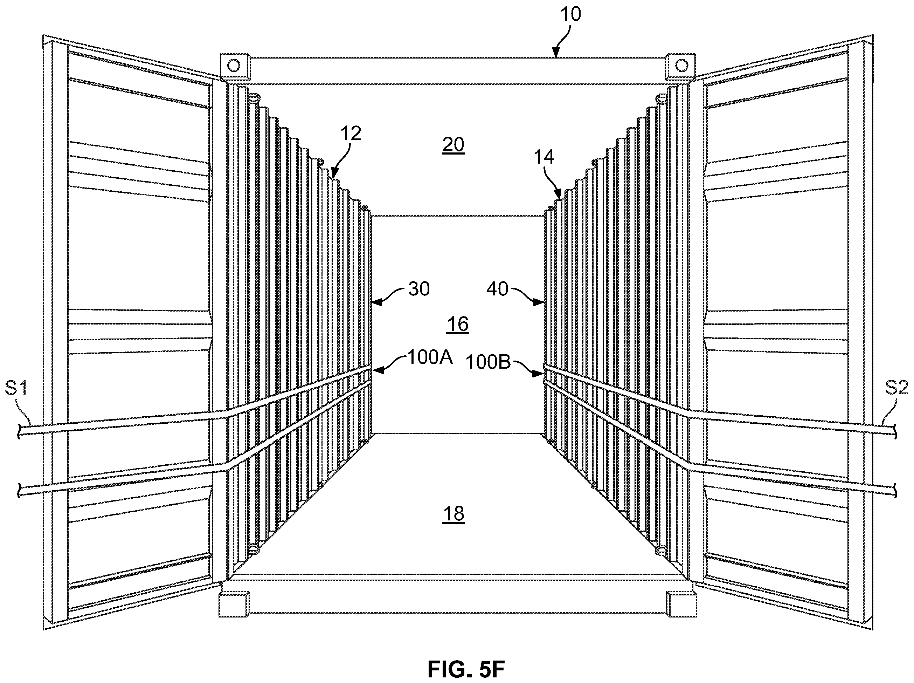

To carry out a load-securement process and secure a load in the shipping container 10 using two load-securement devices 100A and 100B, an operator first attaches the load-securement devices 100A and 100B to the front corner posts 30 and 40, respectively, as described above. An advantage of the load-securement devices of the present disclosure is that they can be used on either front corner post of the shipping container. That is, there's not one type of load-securement device for the left front corner post and a different type of load-securement device for the right front corner post. This means operators don't have to worry about ensuring they're using the correct type of load-securement device for a given front corner post. The operator attaches securement members S1 and S2 to the respective load-securement devices 100A and 100B, respectively, as described above. Figure 5F shows the shipping container 10 after the first and second load-securement devices 100A and 100B have been attached to the first and second front corner posts 30 and 40, respectively, and after first and second securement members S1 and S2 have been attached to the first and second load-securement devices 100A and 100B (labeled but not shown), respectively.

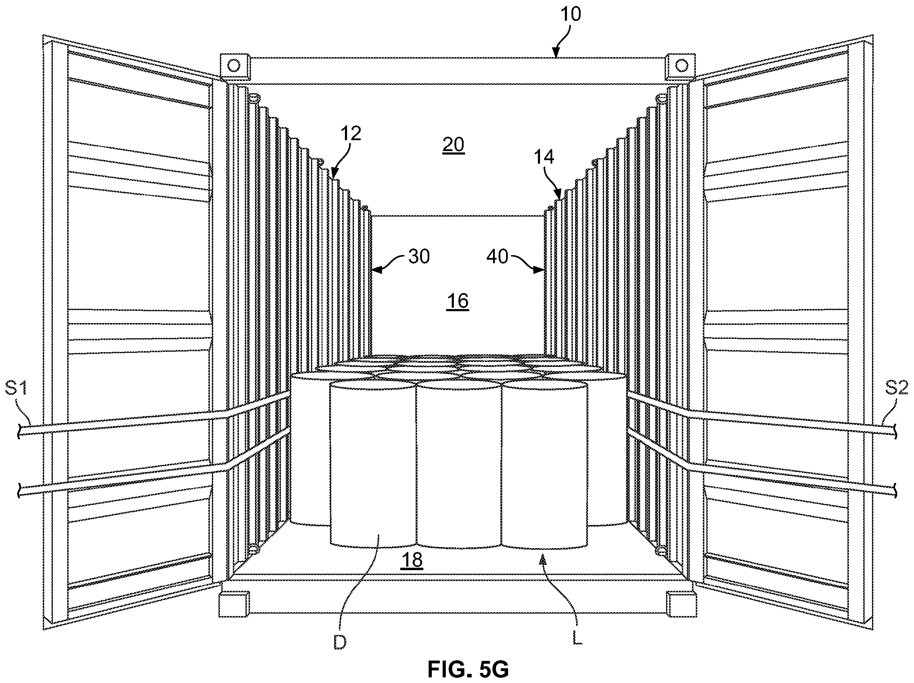

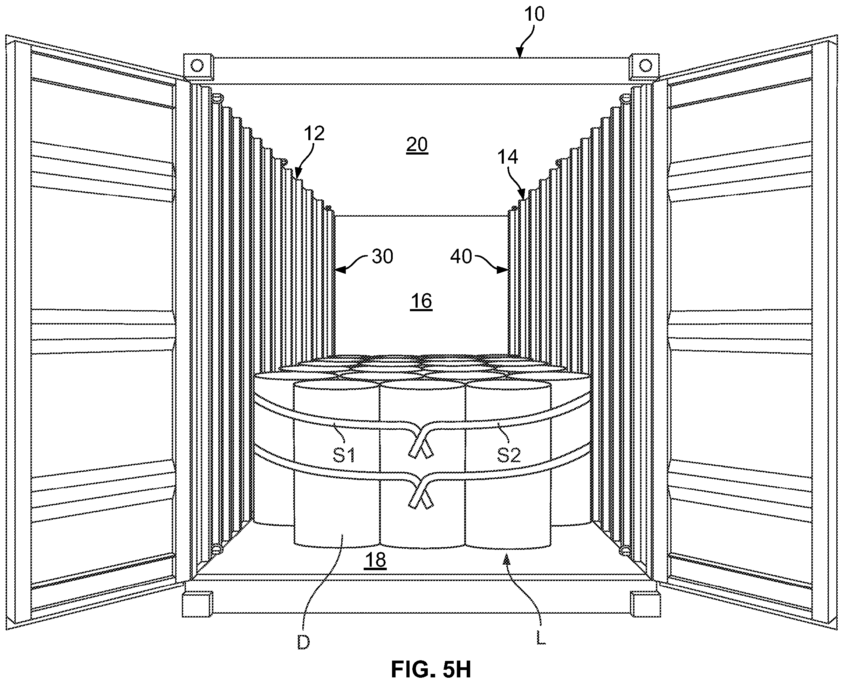

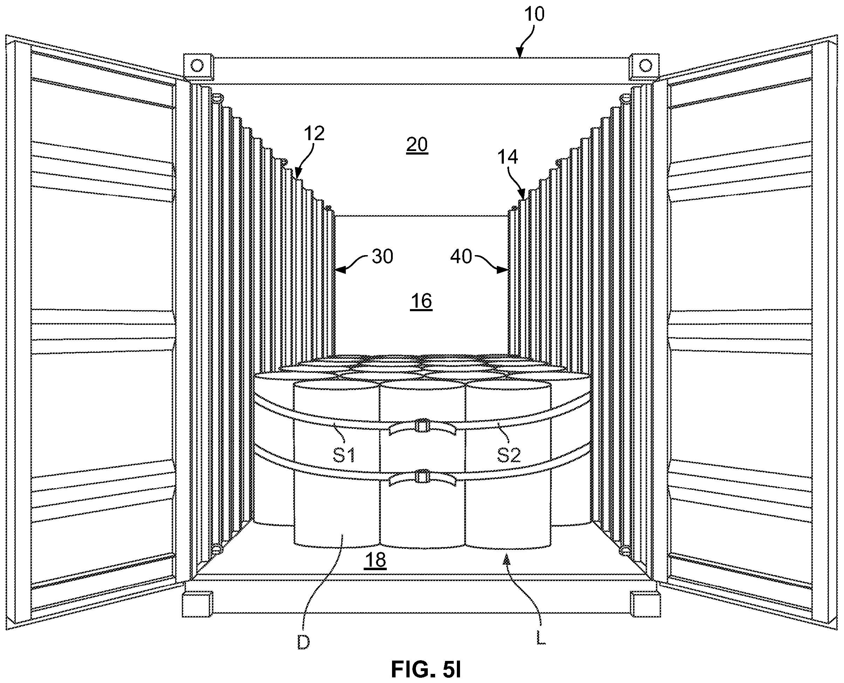

With the securement members S1 and S2 held out of the way, a load L of drums D is loaded into the interior of the shipping container 10, as shown in Figure 5G. The operator manipulates the upper free ends of the first and second securement member S1 and S2 so they wrap around the load L and meet near the middle of the load L and manipulates the lower free ends of the first and second securement members S1 and S2 so they wrap around the load L and are positioned below the upper free ends, as shown in Figure 5H. The operator attaches the upper free ends and the lower free ends to one another (such as via buckles or any other suitable components) and tensions the securement members S1 and S2 around the load L to a particular tension using a tensioning tool (such as an electrically (or otherwise) powered strap tensioner). This pulls the drums D of the load L together and against the front end wall 16 of the shipping container 10 to secure the load L, as shown in Figure 5I. This completes the load-securement process.

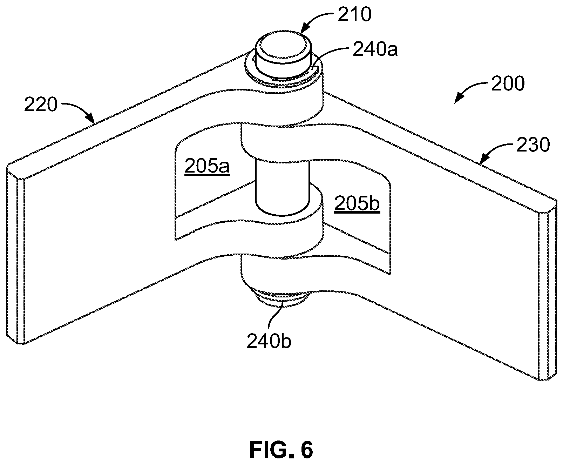

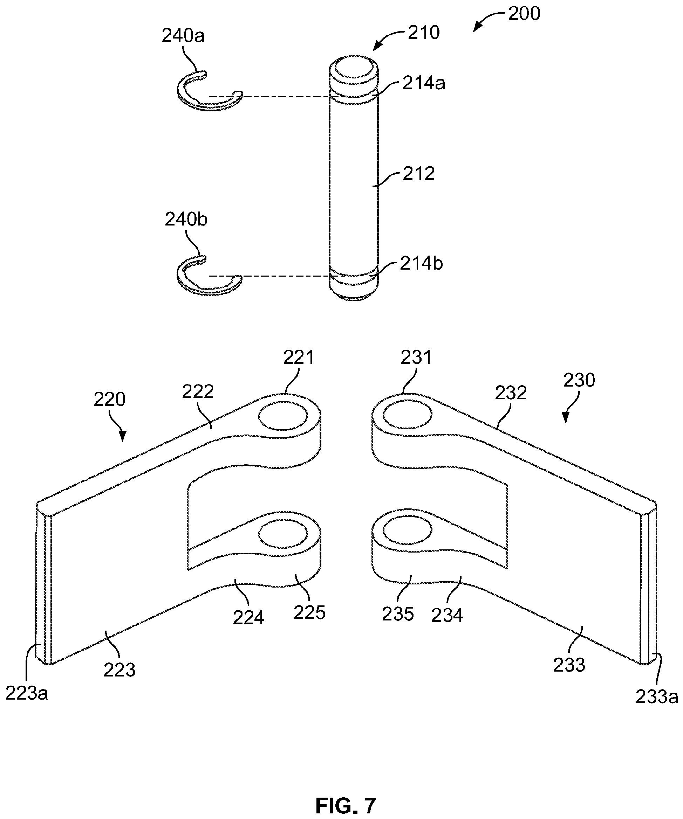

Figures 6-8 show another example embodiment of a load-securement device 200 of the present disclosure. The load-securement device 200 includes a base 210, first and second wings 220 and 230, and first and second retaining elements 240a and 240b. The base 210 and the first wing 220 define a first securement-member-receiving opening 205a bound on all sides, and the base 210 and the second wing 230 define a second securement-member-receiving opening 205b bound on all sides.

The base 210 includes a cylindrical body 212 that defines an annular first groove 214a near one end and an annular second groove 214b near the other end. The first and second grooves 214a and 214b are sized to receive the first and second retaining elements 240a and 240b, as described below.

The first wing 220 includes a tubular first mounting element 221 defining a first bore (not labeled) therethrough, a first arm 222 extending from the first mounting element 221, a planar corner-engaging element 223 extending from the first arm 222 and including a corner-engaging end surface 223a, a second arm 224 extending from the corner-engaging element 223, and a tubular second mounting element 225 defining a bore (not labeled) therethrough that is coaxial with the first bore defined by the first mounting element 221. The corner-engaging end surface 223a represents a corner-engaging end of the first wing 220. In this example embodiment, the components of the first wing 220 are integrally formed, though they may be attached to one another in any suitable manner in other embodiments.

The second wing 230 includes a tubular first mounting element 231 defining a first bore (not labeled) therethrough, a first arm 232 extending from the first mounting element 231, a planar corner-engaging element 233 extending from the first arm 232 and including a corner-engaging end surface 233a, a second arm 234 extending from the corner-engaging element 233, and a tubular second mounting element 235 defining a bore (not labeled) therethrough that is coaxial with the first bore defined by the first mounting element 231. The corner-engaging end surface 233a represents a corner-engaging end of the second wing 230. In this example embodiment, the components of the second wing 230 are integrally formed, though they may be attached to one another in any suitable manner in other embodiments.

The first and second wings 220 and 230 are movably (in this embodiment, pivotably) attached to the base 210 so they can freely pivot about the base 210 and relative to one another. More specifically, the body 212 of the base 210 is received in and extends through the first bore defined by the first mounting element 221 of the first wing 220, the first bore defined by the first mounting element 231 of the second wing 230, the second bore defined by the second mounting element 225 of the first wing 220, and the second bore defined by the second mounting element 235 of the second wing 230. The first and second retaining elements 240a and 240b are received in the first and second grooves 240a and 240b defined in the body 212 of the base 210 to retain the first and second wings 220 and 230 on the base 210.

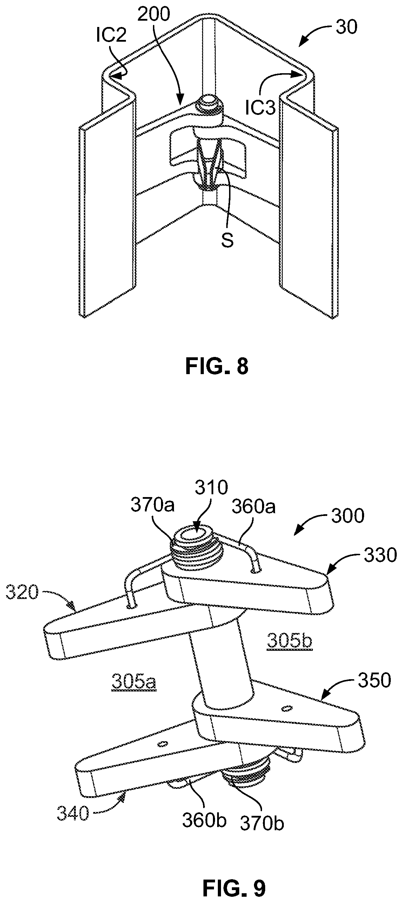

Due to their movable (in this embodiment, pivotable) attachment to the base 210, the first and second wings 220 and 230 are pivotable about the base 210 and relative to one another between a compact configuration and a securement configuration. In the compact configuration (which is similar to the compact configuration of the first and second wings 120 and 130 of the load-securement device 100 shown in Figures 5A and 5B), the first and second wings 220 and 230 are positioned so a first distance separates their respective corner-engaging ends and so the angle formed between the wings is a first angle that is less than 90 degrees. In this example embodiment, when in the compact configuration the distance between the corner-engaging ends of the first and second wings 220 and 230 (here, the corner-engaging end surfaces 223a and 233a) and the angle are minimized. In the securement configuration, which is shown in Figure 8 (and which is similar to the securement configuration of the first and second wings 120 and 130 of the load-securement device 100 shown in Figures 5C-5E), the first and second wings 220 and 230 are positioned so a second distance greater than the first distance separates their respective corner-engaging ends and so the angle between the wings is a second angle greater than the first angle (and approximately 90 degrees in this example embodiment). When the first and second wings 220 and 230 are in their compact configuration, the load-securement device 200 has a compact profile that easily fits within the load-securement-device-receiving channel defined by a front corner post of a shipping container, which facilitates installation.

The load-securement device 200 is attached to a front corner post of a shipping container in a manner similar to the above-described manner of attaching the load-securement device 100 to the front corner post 30. After attachment, the operator can carry out the rest of the load-securement process described above.

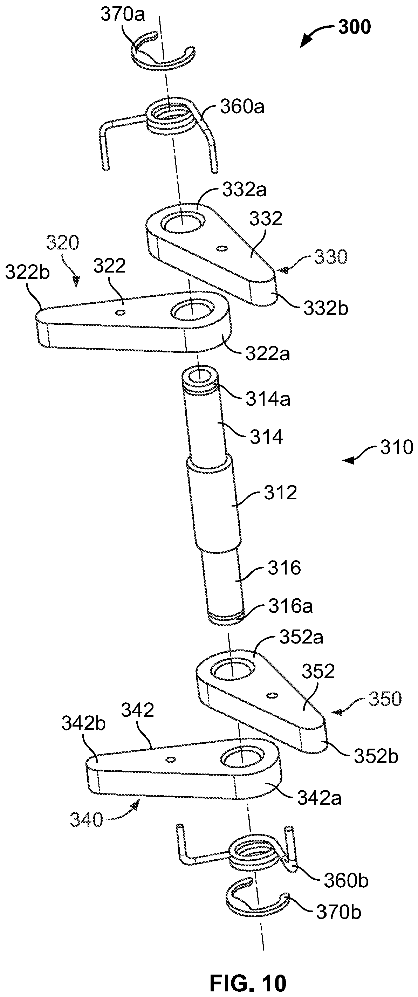

Figures 9-11 show another example embodiment of the load-securement device 300 of the present disclosure. The load-securement device 300 includes a base 310; first, second, third, and fourth wings 320, 330, 340, and 350; first and second biasing elements 360a and 360b; and first and second retaining elements 370a and 370b. The base 310, the first wing 320, and the third wing 330 define a first securement-member-receiving opening 305a that is open on one side, and the base 310, the second wing 330, and the fourth wing 350 define a second securement-member-receiving opening 305b that is open on one side.

The base 310 includes a body having a cylindrical central body portion 312 and cylindrical first and second mounting body portions 314 and 316 extending from opposite ends of the central body portion 312. The first and second mounting body portions 314 and 316 have smaller diameters than the central body portion 312. The first and second mounting body portions 314 and 316 define annular first and second grooves 314a and 316a, respectively, near their ends opposite the central body portion 312. The first and second grooves 314a and 314b are sized to receive the first and second retaining elements 370a and 370b, as described below.

The first wing 320 includes a body 322 having a mounting end 322a defining a bore (not labeled) therethrough and an opposite corner-engaging end 322b. The second wing 330 includes a body 332 having a mounting end 332a defining a bore (not labeled) therethrough and an opposite corner-engaging end 332b. The third wing 340 includes a body 342 having a mounting end 342a defining a bore (not labeled) therethrough and an opposite corner-engaging end 342b. The fourth wing 350 includes a body 352 having a mounting end 352a defining a bore (not labeled) therethrough and an opposite corner-engaging end 352b.

The first, second, third, and fourth wings 320-350 are movably (in this embodiment, pivotably) attached to the base 310 so they can independently pivot about the base 310 and relative to one another. More specifically, the first body mounting portion 314 of the base 310 is received in and extends through the bores defined by the mounting ends 322a and 332a of the bodies 322 and 332 of the first and second wings 320 and 330. The first retaining element 370a is received in the groove 314a defined in the first body mounting portion 314 of the base 310 to retain the first and second wings 320 and 330 on the base 310. The second body mounting portion 316 of the base 310 is received in and extends through the bores defined by the mounting ends 342a and 352a of the bodies 342 and 352 of the third and fourth wings 340 and 350. The second retaining element 370b is received in the groove 316a defined in the second body mounting portion 316 of the base 310 to retain the third and fourth wings 340 and 350 on the base 310.

Due to their movable (in this embodiment, pivotable) attachment to the base 310, the first and second wings 320 and 330 are pivotable about the base 310 and relative to one another between a compact configuration and a securement configuration. Similarly, the third and fourth wings 340 and 350 are pivotable about the base 310 and relative to one another between a compact configuration and a securement configuration. In the compact configuration (which is similar to the compact configuration of the first and second wings 120 and 130 of the load-securement device 100 shown in Figures 5A and 5B), the first and second wings 320 and 330 and the third and fourth wings 340 and 350 are positioned so a first distance separates their respective corner-engaging ends and so the angle formed between the wings is a first angle that is less than 90 degrees. In this example embodiment, when in the compact configuration the distance between the corner-engaging ends of the wings and the angle are minimized. In the securement configuration, which is shown in Figure 9 (and which is similar to the securement configuration of the first and second wings 120 and 130 of the load-securement device 100 shown in Figures 5C-5E), the first and second wings 320 and 330 and the third and fourth wings 340 and 350 are positioned so a second distance greater than the first distance separates their respective corner-engaging ends and so the angle between the wings is a second angle greater than the first angle (and approximately 90 degrees in this example embodiment). When the first and second wings 320 and 330 and the third and fourth wings 340 and 350 are in their compact configuration, the load-securement device 300 has a compact profile that easily fits within the load-securement-device-receiving channel defined by a front corner post of a shipping container, which facilitates installation.

The first biasing element 360a is operably engaged to the first and second wings 320 and 330 to bias the first and second wings 320 and 330 to the securement configuration. In this example embodiment, the first biasing element 360a includes a torsion spring having two arms (not labeled) received in bores (not labeled) defined in the first and second arms 320 and 330 and having a head mounted to the first body mounting portion 314 of the base 310. Similarly, the second biasing element 360b is operably engaged to the third and fourth wings 340 and 350 to bias the third and fourth wings 340 and 350 to the securement configuration. In this example embodiment, the second biasing element 360b includes a torsion spring having two arms (not labeled) received in bores (not labeled) defined in the third and fourth arms 340 and 350 and having a head mounted to the second body mounting portion 316 of the base 310. The biasing elements may be any other type of spring or any other suitable biasing elements in other embodiments.

The load-securement device 300 is attached to a front corner post of a shipping container in a manner similar to the above-described manner of attaching the load-securement device 100 to the front corner post 30. A difference is that the operator manipulates the wings into the compact configuration by overcoming the biasing force of the biasing elements before inserting the load-securement device into the load-securement-device receiving channel. After attachment, the operator can carry out the rest of the load-securement process described above.

Other embodiments of the load-securement device of the present disclosure (such as the load-securement devices 100 and 200) may include one or more biasing elements operably engaged to the first and second wings to bias the first and second wings to their securement configuration.

In the embodiments of the load-securement device described above and shown in Figures 2, 3, and 5A-11, the wings of the load-securement device are sized so they are transverse to (and in certain embodiments perpendicular to) one another when in the securement position and attached to a front corner post of a shipping container. The angle defined between the wings may be, for instance, between about 90 degrees and about 180 degrees. In other embodiments, the wings of the load-securement device are sized so they are parallel to one another and generally coplanar (and in certain embodiments parallel to the plane P shown in Figure 4) when in the securement position. In some embodiments, the load-securement device includes stop blocks (such as on the wings or the base) that the wings engage as they reach the securement position and that prevent the wings from pivoting any further than the securement position. In other words, in these embodiments, the wings can pivot so the maximum angle formed between them is that particular angle. This prevents over-pivoting of the wings, which could lead to loss of engagement between the wings and the interior corners of the front corner post and detachment of the load-securement device from the front corner post.

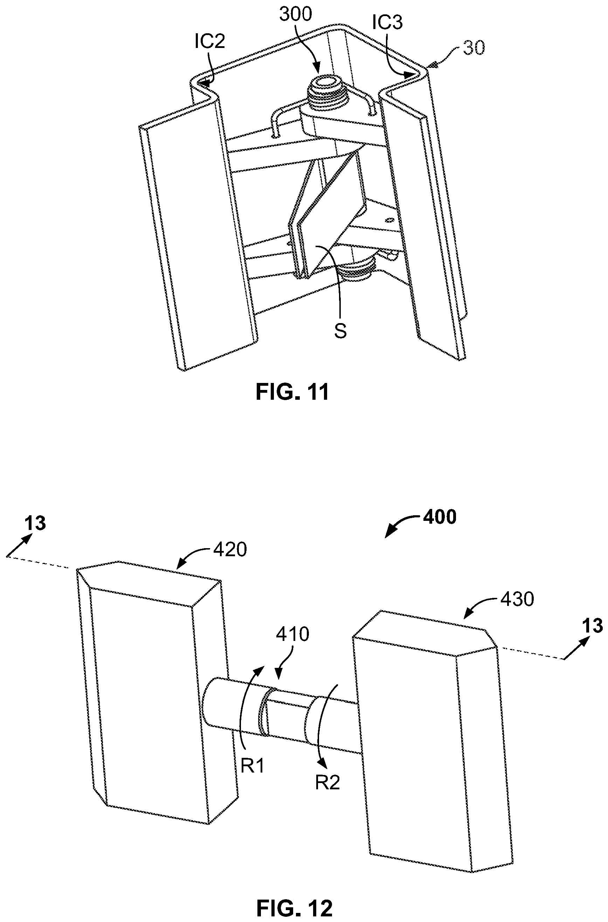

Figures 12-14E show another example embodiment of a load-securement device 400 of the present disclosure. The load-securement device 400 includes a base 410 and first and second wings 420 and 430. The base 410 and the first and second wings 420 and 430 define first and second securement-member-receiving openings 405a and 405b on opposite sides of the base 410. These securement-member-receiving openings are each open on one side.

The base 410 includes a generally cylindrical body 412. A tool-contact element 412a is formed on the center of the body 412, and includes one or more generally planar surfaces engageable by a tool to cause rotation of the body 412 relative to the first and second wings 420 and 430 (as described below). A first end 412b of the body 412 has left-hand threads formed thereon, and a second end 412c of the body 412 opposite the first end 412b has right-hand threads formed thereon (though other embodiments the directions of the threads are switched).

The first wing 420 includes a body 422 having a mounting end 422a and an opposite corner-engaging end 422b. A left-hand-threaded mounting bore 422c is formed in the body 422 and extends partially through the body 422 from the mounting end 422a toward the corner-engaging end 422b. Similarly, the second wing 430 includes a body 432 having a mounting end 432a and an opposite corner-engaging end 432b. A right-hand-threaded mounting bore 432c is formed in the body 432 and extends partially through the body 432 from the mounting end 432a toward the corner-engaging end 432b.

The first and second wings 420 and 430 are movably attached to the base 410 so they can translate relative to the base 410 and to one another. More specifically, the first end 412b of the body 412 of the base 410 is threadably received in the threaded bore 422c formed in the body 422 of the first wing 420, and the second end 412c of the body 412 of the base 410 is threadably received in the threaded bore 432c formed in the body 432 of the second wing 430. Since the ends of the base 410 are oppositely threaded, relative rotation between the base 410 and the first wing 420 and/or the second wing 430 causes the first and second wings 420 and 430 to move toward or away from one another, depending on the direction of rotation. For instance, when the base 410 is rotated relative to the first and second wings 420 and 430 in the direction R1 (Figure 12), the first and second wings 420 and 430 move away from one another. Conversely, when the base 410 is rotated relative to the first and second wings 420 and 430 in the opposite direction R2 (Figure 12), the first and second wings 420 and 430 move towards one another.

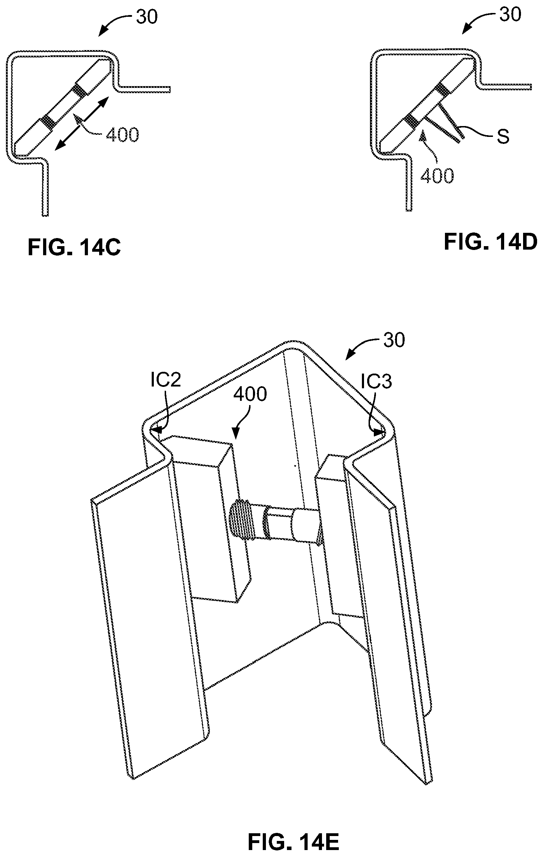

Due to their movable attachment to the base 410, the first and second wings 420 and 430 are movable and relative to the base and to one another between a compact configuration and a securement configuration. In the compact configuration, which is shown in Figures 12-14B, the first and second wings 420 and 430 are positioned so a first distance separates their respective corner-engaging ends 422b and 432b. In this example embodiment, when in the compact configuration the first and second ends 412b and 412c of the body 412 of the base 410 are completely threaded into the respective threaded bores 422c and 432c formed in the first and second wings 420 and 430 such that the distance between their respective corner-engaging ends 422b and 432b is minimized. In the securement configuration, which is shown in Figures 14C-14E, the first and second wings 420 and 430 are positioned so a second distance greater than the first distance separates their respective corner-engaging ends 422b and 432b. When the first and second wings 420 and 430 are in their compact configuration, the load-securement device 400 has a compact profile that easily fits within the load-securement-device-receiving channel defined by a front corner post of a shipping container, which facilitates installation. In this example embodiment, the angle (not labeled) formed between the wings does not substantially change as the wings move between their compact and securement configuration (and is approximately 180 degrees in this example embodiment).

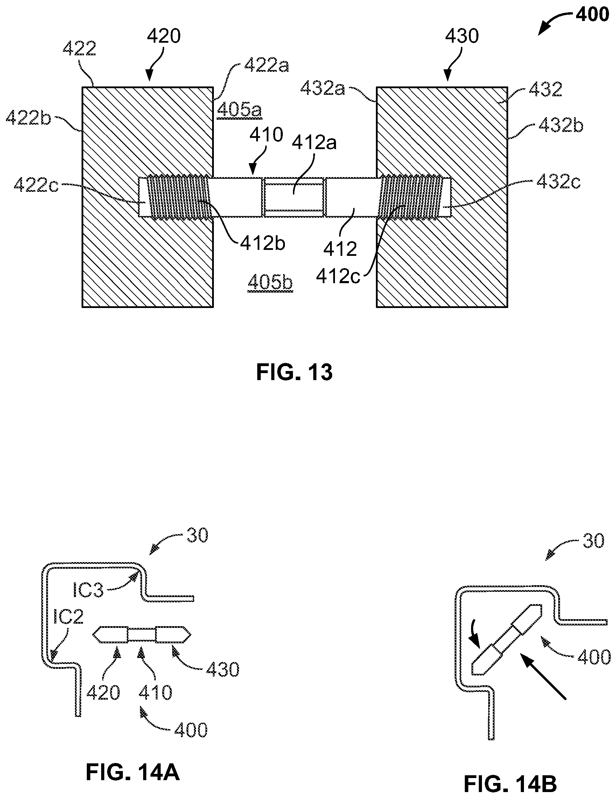

Figures 14A-14E show the load-securement device 400 being attached to the front corner post 30 and a securement member S being attached to the load-securement device 400. Turning to Figure 14A, the first and second wings 420 and 430 of the load-securement device 400 are initially in the compact configuration. As shown in Figure 14B, an operator moves the load-securement device 400 within (or partially within) the load-securement-device-receiving channel V defined by the front corner post 30 so the corner-engaging ends 422b and 432b of the wings 420 and 430 are generally aligned with the second and third interior corners IC2 and IC3 of the front corner post 30. As shown in Figure 14C, the operator rotates the base 410 (such as by engaging the tool-contact element 412a of the base 410 with a wrench or other similar tool) in the direction R1 (Figure 12), which causes the first and second wings 420 and 430 to separate until their respective corner-engaging ends 422b and 432b engage the second and third interior corners IC2 and IC3 of the front corner post 30. This engagement retains the load-securement device 400 in place as the operator attaches the securement member S to the load-securement device 400. Specifically, the operator threads an end of the securement member S through the first securement-member-receiving opening 405a, around the base 410, and back through the second securement-member-receiving opening 405b. After attachment, the operator can carry out the rest of the load-securement process described above.

While the corner-engaging ends 422b and 432b come to a point in this example embodiment (as shown in the figures), they may take any suitable shape, such as a planar shape, a curved shape, an inverted V- or U-shape, and the like.

In other embodiments, the tool-contact element formed on the center of the body of the base of the load-securement device defines a full or partial bore sized to receive a tool, such as a screwdriver. This bore enables an operator to use this tool to rotate the base by inserting the tool into the bore and then rotating the tool.

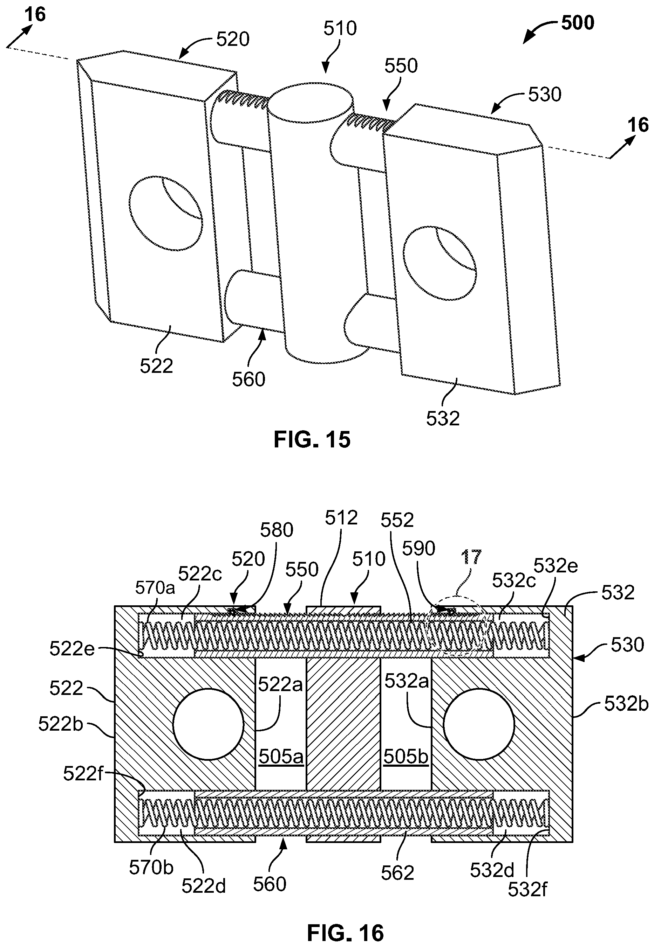

Figures 15-18 show another example embodiment of the load-securement device 500 of the present disclosure. The load-securement device 500 includes a base 510, first and second wings 520 and 530, first and second spacers 550 and 560, first and second biasing elements 570a and 570b, and first and second anti-retraction assemblies 580 and 590. The base 510, the first wing 520, and the first and second spacers 550 and 560 define a first securement-member-receiving opening 505a bound on all sides, and the base 510, the second wing 530, and the first and second spacers 550 and 560 define a second securement-member-receiving opening 505b bound on all sides.

The base 510 includes a generally cylindrical body 512. First and second bores (not labeled) sized to receive the first and second spacers 550 and 560, respectively, are defined through the body 512 near its opposite ends. The longitudinal axes of the bores are oriented transversely to (here, perpendicular to) the longitudinal axis of the body 512.

The first wing 520 includes a body 522 having a mounting end 522a and an opposite corner-engaging end 522b. A first spacer-receiving bore 522c is formed in the body 522 and extends partially through the body 522 from the mounting end 522a toward the corner-engaging end 522b, terminating at a first end surface 522e. A second spacer-receiving bore 522d is formed in the body 522 and extends partially through the body 522 from the mounting end 522a toward the corner-engaging end 522b, terminating at a second end surface 522f.

The second wing 530 includes a body 532 having a mounting end 532a and an opposite corner-engaging end 532b. A first spacer-receiving bore 532c is formed in the body 532 and extends partially through the body 532 from the mounting end 532a toward the corner-engaging end 532b, terminating at a first end surface 532e. A second spacer-receiving bore 532d is formed in the body 532 and extends partially through the body 532 from the mounting end 532a toward the corner-engaging end 532b, terminating at a second end surface 532f.

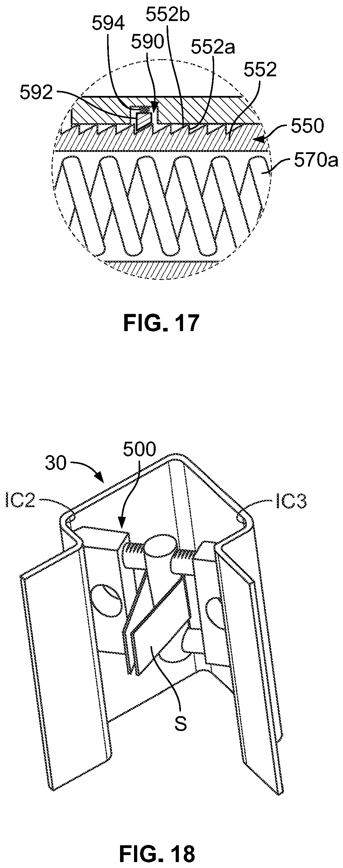

The first spacer 550 includes a tubular body 552 that has a saw-tooth profile defined along part of its length. As best shown in Figure 17, the saw-tooth profile includes a repeating pattern of vertical stop surfaces 552a and angled ramp surfaces 552b. As described below, the saw-tooth profile is engaged by the anti-retraction assemblies 580 and 590 to provide the anti-retraction functionality. The second spacer 560 includes a generally tubular body 562.

The first and second wings 520 and 530 are movably attached to the base 510 so they can translate relative to the base and to one another (subject to the anti-retraction functionality explained below). More specifically, The first spacer 550 is slidably received in and extends through the first bore of the body 512 of the base 510 so one of its ends is slidably received in the first spacer-receiving bore 522c of the body 522 of the first wing 520 and its opposite end is slidably received in the first spacer-receiving bore 532c of the body 532 of the second wing 530. The second spacer 560 is slidably received in and extends through the second bore of the body 512 of the base 510 so one of its ends is slidably received in the second spacer-receiving bore 522d of the body 522 of the first wing 520 and its opposite end is slidably received in the second spacer-receiving bore 532d of the body 532 of the second wing 530.

Due to their movable attachment to the base 510 (via the first and second spacers 550 and 560), the first and second wings 520 and 530 are movable relative to the base 510 and to one another between a compact configuration and a securement configuration. In the compact configuration the first and second wings 520 and 530 are positioned so a first distance separates their respective corner-engaging ends 522b and 532b. In this example embodiment, in the compact configuration, the first and second wings 520 and 530 are positioned adjacent to (and in some embodiments contacting) the base 510 such that the distance between their respective corner-engaging ends 522b and 532b is minimized. In the securement configuration, which is shown in Figures 15, 16, and 18, the first and second wings 520 and 530 are positioned so a second distance greater than the first distance separates their respective corner-engaging ends 522b and 532b. When the first and second wings 520 and 530 are in their compact configuration, the load-securement device 500 has a compact profile that easily fits within the load-securement-device-receiving channel defined by a front corner post of a shipping container, which facilitates installation.

The first biasing member 570a, which includes a compression spring in this example embodiment, is slidably received in the bore defined through the first spacer 550 and is sized to contact and extend between the first end surface 522e of the body 522 of the first wing 520 and the first end surface 532e of the body 532 of the second wing 530. The second biasing member 570b, which includes a compression spring in this example embodiment, is slidably received in the bore defined through the second spacer 560 and is sized to contact and extend between the second end surface 522f of the body 522 of the first wing 520 and the second end surface 532f of the body 532 of the second wing 530. The first and second biasing members are therefore operably engaged to the first and second wings 520 and 530 and configured to bias the first and second wings 520 and 530 to the securement configuration. The biasing elements may be any other type of spring or any other suitable biasing elements in other embodiments.

The first and second anti-retraction assemblies 580 and 590 are operably connected to the first and second wings 520 and 530, respectively, and the first spacer 550 and prevent the first and second wings from moving toward the base 510. As best shown in Figure 17, the second anti-retraction assembly 590 includes a wedge-shaped head 592 and a biasing element 594 (here, a compression spring). The second anti-retraction assembly 590 is received in a partial bore (not labeled) defined in the body 532 of the second wing 530 that is transverse to and intersects the first spacer-receiving bore 532c. the biasing element 594 is operably connected to the head 592 to bias the head 592 into contact with the surface of the first spacer 550 on which the saw-tooth profile is defined. The head 592 is shaped and oriented to: (1) engage the vertical stop surface 552a when force is applied to the second wing 530 in a direction toward the base 510, which prevents the second wing 530 from moving toward the base 510; and (2) ride along the successive ramp surfaces 552b when force is applied to the second wing 530 in a direction away from the bas 510, which does not prevent the second wing 530 from moving away from the base 510. Although not shown in detail, the first anti-retraction assembly 580 provides similar functionality for the first wing 520. This is merely one example anti-retraction assembly, and any other suitable assemblies may be used to obtain similar functionality.

The load-securement device 500 is attached to the front corner post of the shipping container in a manner similar to the above-described manner of attaching the load-securement device 100 to the front corner post 30. Since the first and second biasing elements 570a and 570b bias the first and second wings 520 and 530 to the securement configuration and the anti-retraction assemblies 580 and 590 prevent movement of the first and second wings 520 and 530 toward the base 510, the load-securement device 500 is delivered to the operator with the first and second wings temporarily fixed in the compact configuration. For instance, the first and second wings 520 and 530 may be tied together (such as via a zip tie, rubber band, or similar element) that prevents the wings from moving. Once the operator positions the load-securement device 500 within the load-securement-device-receiving channel of the front corner post, the operator releases the first and second wings 520 and 530 (such as by cutting the zip tie). The first and second biasing elements 570a and 570b bias the first and second wings 520 and 530 to the securement configuration and into engagement with the interior corners of the front corner post. Once they reach this position, the anti-retraction assemblies 580 and 590 prevent the first and second wings 520 and 530 from moving back toward the base 510, effectively locking them in place. After attachment, the operator can carry out the rest of the load-securement process described above.

In other embodiments, the load-securement device does not include the anti-retraction assemblies. In some embodiments, the anti-retraction assemblies are releasable to enable the corresponding wing to move toward the base. This enables the operator to detach the load-securement device from the front corner post by releasing one of the anti-retraction assemblies, which enables the operator to move the corresponding wings toward the base and out of engagement with the interior corner of the front corner post.

In certain embodiments, the corner-engaging ends of the load-securement device include roughened surfaces, coatings, or friction-enhancing elements, such as friction-engaging pads that have a higher coefficient of friction than the material the wings are formed from. This increased coefficient of friction enhances frictional engagement between the corner-engaging ends and the front corner post.

## Claims

1. A load-securement process for securing a load (L) in a shipping container including first and second front corner posts (30, 40), the process comprising:
positioning a first load-securement device (100A) comprising a base (110), a first wing (120) movably attached to the base (110) and comprising a first corner-engaging end (123), and a second wing (130) movably attached to the base and comprising a second corner-engaging end (133), the first and second wings (120, 130) of the first load-securement device (100A) being movable relative to one another from a compact configuration to a securement configuration, at least partially within a load-securement-device-receiving channel (V) defined by the first corner post (30) while the first and second wings (120, 130) are in the compact configuration; and
securing the first load-securement device (100A) to the first front corner post (30) by manipulating the first and second wings (120, 130) into the securement configuration so their respective first and second corner-engaging ends (123, 133) engage opposing interior corners (IC2, IC3) of the first front corner post (30),
wherein the base (110) and the first and second wings (120, 130) are sized to fit entirely within the load-securement-device-receiving channel (V) of the front corner post (30, 40) when the first and second wings (120, 130) are in the securement configuration.

2. The load-securement process of claim 1, further comprising:
positioning a second load-securement device (100B) comprising a base (110), a first wing (120) movably attached to the base (110) and comprising a first corner-engaging end (123), and a second wing (320) movably attached to the base (110) and comprising a second corner-engaging end (133), the first and second wings (120, 130) of the second load-securement device (100B) being movable relative to one another from a compact configuration to a securement configuration, at least partially within a load-securement-device-receiving channel (V) defined by the second corner post (40) while the first and second wings (120, 130) are in the compact configuration;
securing the second load-securement device (100B) to the second front corner post (40) by manipulating the first and second wings (120, 130) into the securement configuration so their respective first and second corner-engaging ends (123, 133) engage opposing interior corners (IC2, IC3) of the second front corner post (40);
attaching a first securement member (S1) to the first load-securement device (100A);
attaching a second securement member (S2) to the second load-securement device (100B);
wrapping the first and second securement members (S1, S2) around the load (L); and
attaching the first and second securement members (S1, S2) to one another; and
preferably further comprising tensioning the first and second securement members (S1, S2) around the load (L).

3. The load-securement process of any of claims 1 or 2, wherein attaching a first securement member (S1) to the first load-securement device (100A) comprises:
threading a first end of the first securement member (S1) through a first securement-member-receiving opening (105a) defined in part by the first wing (120); and
threading the first end of the first securement member (S1) through a second securement-member-receiving opening (105b) defined in part by the second wing (130) so the first securement member (S1) is wrapped around the base (110).

4. The load-securement process of any of claims 1 - 3, wherein the first and second wings (120, 130) are pivotably attached to the base (110) such that manipulating the first and second wings (120, 130) of the first load-securement device (100A) into the securement configuration comprises pivoting at least one of the first and second wings (120, 130) about the base (110) to separate their respective first and second corner-engaging ends (123, 133).

5. The load-securement process of any of claims 1 - 4, further comprising manipulating the first and second wings (120, 130) into the compact configuration before inserting the first load-securement device (100A) at least partially within the load-securement-device-receiving channel (V) defined by the first corner post (30).

6. The load-securement process of any of claims 1 - 5, wherein the first load-securement device (100A) further comprises a first biasing element operably engaged to the first and second wings (120, 130) and configured to bias the first and second wings (120, 130) to the securement configuration such that manipulating the first and second wings (120, 130) of the first load-securement device (100A) into the securement configuration comprises enabling the first biasing element to bias the first and second wings (120, 130) into the securement configuration;
wherein optionally manipulating the first and second wings (120, 130) of the first load-securement device (100A) into the compact configuration comprises pivoting at least one of the first and second wings (120, 130) about the base (110) and against the biasing force of the first biasing element to move their respective first and second corner-engaging ends (123, 133) toward one another.

7. The load-securement process of any of claims 1-3 and 5-6, wherein the first and second wings (120, 130) are movable in translation relative to the base (110) such that manipulating the first and second wings (120, 130) into the securement configuration comprises moving at least one of the first and second wings (120, 130) in translation relative to the base (110) to separate their respective first and second corner-engaging ends (123, 133);
wherein optionally the base (110) comprises a body with oppositely threaded portions that are threadably received in the first and second wings, (120, 130) respectively, such that manipulating the first and second wings (120, 130) into the securement configuration comprises rotating the base (110) relative to the first and second wings (120, 130), thereby causing the first and second wings (120, 130) to move in translation away from the base (110) and away from one another.

8. A load-securement device (100) attachable to a front corner post (30, 40) of a shipping container, the front corner post (30, 40) comprising multiple walls at least partially defining a load-securement-device-receiving channel (V) and forming opposing first and second interior corners (IC2, IC3) of the front corner post (30, 40), the load-securement device (100) comprising:
a base (110);
a first wing (120) movably attached to the base (110) and comprising a first corner-engaging end (123); and
a second wing (130) movably attached to the base (110) and comprising a second corner-engaging end (133),
wherein the first and second wings (120, 130) are movable relative to one another from a compact configuration in which a first distance separates the first and second corner-engaging ends (123, 133) to a securement configuration in which a second greater distance separates the first and second corner-engaging ends (123, 133), and
wherein the first and second wings (120, 130) are sized to engage the first and second interior corners (IC2, IC3) of the front corner post (30, 40), respectively, when in the securement configuration and not when in the compact configuration, and
wherein the base (110) and the first and second wings (120, 130) are sized to fit entirely within the load-securement-device-receiving channel (V) of the front corner post (30, 40) when the first and second wings (120, 130) are in the securement configuration.

9. The load-securement device (100) of claim 8, wherein the base (110) and the first wing (120) at least partially define a first securement-member-receiving opening (105a) sized to receive a securement member (S), wherein the base (110) and the second wing (130) at least partially define a second securement-member-receiving opening (105b) sized to receive the securement member (S).

10. The load-securement device (100) of any of claims 8 or 9, wherein the first and second wings (120, 130) are pivotably attached to the base (110) and configured to pivot from the compact configuration to the securement configuration, wherein a first angle is formed between the first and second wings (120, 130) when the first and second wings (120, 130) are in the compact configuration and a second greater angle is formed between the first and second wings (120, 130) when the first and second wings (120, 130) are in the securement configuration.

11. The load-securement device (100) of claim 10, wherein the second angle is at least 90 degrees and no greater than 180 degrees.

12. The load-securement device (100) of any of claims 8 - 9, wherein the first and second wings (120, 130) are movable in translation relative to the base (110); and
wherein optionally the first and second wings (120, 130) are coplanar when they are in the compact configuration and when they are in the securement configuration.

13. The load-securement device (100) of claim 12, wherein the base (110) comprises a body having oppositely threaded portions that are threadably received in the first and second wings (120, 130), respectively, so rotation of the base (110) relative to the first and second wings (120, 130): (1) in a first direction causes the first and second wings (120, 130) to move in translation away from the base (110) and away from one another; and (2) in a second direction opposite the first direction causes the first and second wings (120, 130) to move in translation toward the base (110) and toward one another.

14. The load-securement device (100) of any of claims 8 - 13, further comprising a biasing element operably connected to the first and second wings (120, 130) and configured to bias the first and second wings (120, 130) to the securement configuration;
preferably further comprising an anti-retraction assembly configured to prevent the first wing (120) from moving toward the base (110).

## Patentansprüche

1. Lastsicherungsprozess zum Sichern einer Last (L) in einem Versandcontainer, der einen ersten und einen zweiten vorderen Eckpfosten (30, 40) enthält, wobei der Prozess Folgendes umfasst:
Anordnen einer ersten Lastsicherungsvorrichtung (100A), die einen Sockel (110), einen ersten Flügel (120), der am Sockel (110) beweglich befestigt ist und ein erstes Eckeingriffelement (123) aufweist, und einen zweiten Flügel (130), der am Sockel beweglich befestigt ist und ein zweites Eckeingriffende (133) aufweist, umfasst, wobei der erste und der zweite Flügel (120, 130) der ersten Lastsicherungsvorrichtung (100A) zumindest teilweise innerhalb eines Lastsicherungsvorrichtungs-Aufnahmekanals (V), der durch den ersten Eckpfosten (30) definiert wird, relativ zueinander aus einer kompakten Konfiguration in eine Sicherungskonfiguration bewegt werden können, während sich der erste und der zweite Flügel (120, 130) in der kompakten Konfiguration befinden; und
Arretieren der ersten Lastsicherungsvorrichtung (100A) am ersten vorderen Eckpfosten (30) durch Versetzen des ersten und des zweiten Flügels (120, 130) in die Sicherungskonfiguration, derart, dass ihr jeweiliges erstes und zweites Eckeingriffende (123, 133) mit gegenüberliegenden Innenraumecken (IC2, IC3) des ersten vorderen Eckpfostens (30) in Eingriff gelangt,
wobei der Sockel (110) und der erste und der zweite Flügel (120, 130) derart bemessen sind, dass sie vollständig in den Lastsicherungsvorrichtungs-Aufnahmekanal (V) des vorderen Eckpfostens (30, 40) passen, wenn sich der erste und der zweite Flügel (120, 130) in der Sicherungskonfiguration befinden.

2. Lastsicherungsprozess nach Anspruch 1, der ferner Folgendes umfasst:
Anordnen einer zweiten Lastsicherungsvorrichtung (100B), die einen Sockel (110), einen ersten Flügel (120), der am Sockel (110) beweglich befestigt ist und ein erstes Eckeingriffelement (123) aufweist, und einen zweiten Flügel (320), der am Sockel (110) beweglich befestigt ist und ein zweites Eckeingriffende (133) aufweist, umfasst, wobei der erste und der zweite Flügel (120, 130) der zweiten Lastsicherungsvorrichtung (100B) zumindest teilweise innerhalb eines Lastsicherungsvorrichtungs-Aufnahmekanals (V), der durch den zweiten Eckpfosten (40) definiert wird, relativ zueinander aus einer kompakten Konfiguration in eine Sicherungskonfiguration bewegt werden können, während sich der erste und der zweite Flügel (120, 130) in der kompakten Konfiguration befinden; und
Arretieren der zweiten Lastsicherungsvorrichtung (100B) am zweiten vorderen Eckpfosten (40) durch Versetzen des ersten und des zweiten Flügels (120, 130) in die Sicherungskonfiguration, derart, dass ihr jeweiliges erstes und zweites Eckeingriffende (123, 133) mit gegenüberliegenden Innenraumecken (IC2, IC3) des zweiten vorderen Eckpfostens (40) in Eingriff gelangt;
Befestigen eines ersten Sicherungselements (S1) an der ersten Lastsicherungsvorrichtung (100A);
Befestigen eines zweiten Sicherungselements (S2) an der zweiten Lastsicherungsvorrichtung (100B);
Wickeln des ersten und des zweiten Sicherungselements (S1, S2) um die Last (L); und
Befestigen des ersten und des zweiten Sicherungselements (S1, S2) aneinander; und
wobei er vorzugsweise ferner das Spannen des ersten und des zweiten Sicherungselements (S1, S2) um die Last (L) umfasst.

3. Lastsicherungsprozess nach einem der Ansprüche 1 oder 2, wobei das Befestigen eines ersten Sicherungselements (S1) an der ersten Lastsicherungsvorrichtung (100A) Folgendes umfasst:
Schrauben eines ersten Endes des ersten Sicherungselements (S1) durch eine erste Sicherungselement-Aufnahmeöffnung (105a), die teilweise durch den ersten Flügel (120) definiert wird; und
Schrauben des ersten Endes des ersten Sicherungselements (S1) durch eine zweite Sicherungselement-Aufnahmeöffnung (105b), die teilweise durch den zweiten Flügel (130) definiert wird, derart, dass das erste Sicherungselement (S1) um den Sockel (110) gewickelt wird.

4. Lastsicherungsprozess nach einem der Ansprüche 1-3, wobei der erste und der zweite Flügel (120, 130) am Sockel (110) drehbar befestigt sind, derart, dass das Versetzen des ersten und des zweiten Flügels (120, 130) der ersten Lastsicherungsvorrichtung (100A) in die Sicherungskonfiguration das Drehen des ersten und/oder des zweiten Flügels (120, 130) um den Sockel (110), um ihr jeweiliges erstes und zweites Eckeingriffende (123, 133) zu trennen, umfasst.

5. Lastsicherungsprozess nach einem der Ansprüche 1-4, der ferner das Versetzen des ersten und des zweiten Flügels (120, 130) in die kompakte Konfiguration vor dem Einsetzen der ersten Lastsicherungsvorrichtung (100A) zumindest teilweise in den Lastsicherungsvorrichtungs-Aufnahmekanal (V), der durch den ersten Eckpfosten (30) definiert wird, umfasst.

6. Lastsicherungsprozess nach einem der Ansprüche 1-5, wobei die erste Lastsicherungsvorrichtung (100A) ferner ein erstes Vorbelastungselement umfasst, das sich mit dem ersten und dem zweiten Flügel (120, 130) funktionstechnisch in Eingriff befindet und konfiguriert ist, den ersten und den zweiten Flügel (120, 130) in die Sicherungskonfiguration vorzubelasten, derart, dass das Versetzen des ersten und des zweiten Flügels (120, 130) der ersten Lastsicherungsvorrichtung (100A) in die Sicherungskonfiguration das Ermöglichen, dass das erste Vorbelastungselement den ersten und den zweiten Flügel (120, 130) in die Sicherungskonfiguration vorbelastet, umfasst;
wobei wahlweise das Versetzen des ersten und des zweiten Flügels (120, 130) der ersten Lastsicherungsvorrichtung (100A) in die kompakte Konfiguration das Drehen des ersten und/oder des zweiten Flügels (120, 130) um den Sockel (110) und gegen die Vorbelastungskraft des ersten Vorbelastungselements, um ihr jeweiliges erstes und zweites Eckeingriffende (123, 133) zueinander zu bewegen, umfasst.

7. Lastsicherungsprozess nach einem der Ansprüche 1-3 und 5-6, wobei der erste und der zweite Flügel (120, 130) relativ zum Sockel (110) translatorisch beweglich sind, derart, dass das Versetzen des ersten und des zweiten Flügels (120, 130) in die Sicherungskonfiguration das Bewegen des ersten und/oder des zweiten Flügels (120, 130) translatorisch relativ zum Sockel (110), um ihr jeweiliges erstes und zweites Eckeingriffende (123, 133) zu trennen, umfasst;
wobei wahlweise der Sockel (110) einen Körper mit gegenläufigen Gewindeabschnitten, die im ersten bzw. im zweiten Flügel (120, 130) schraubbar aufgenommen sind,
umfasst, derart, dass das Versetzen des ersten und des zweiten Flügels (120, 130) in die Sicherungskonfiguration das Drehen des Sockels (110) relativ zum ersten und zweiten Flügel (120, 130), wodurch bewirkt wird, dass sich der erste und der zweite Flügel (120, 130) translatorisch vom Sockel (110) weg und voneinander weg bewegen, umfasst.

8. Lastsicherungsvorrichtung (100), die an einem vorderen Eckpfosten (30, 40) eines Versandcontainers befestigt werden kann, wobei der vordere Eckpfosten (30, 40) mehrere Wände umfasst, die zumindest teilweise einen Lastsicherungsvorrichtungs-Aufnahmekanal (V) definieren und eine gegenüberliegende erste und zweite Innenraumecke (IC2, IC3) des vorderen Eckpfostens (30, 40) bilden, wobei die Lastsicherungsvorrichtung (100) Folgendes umfasst:
einen Sockel (110);
einen ersten Flügel (120), der am Sockel (110) beweglich befestigt ist und ein erstes Eckeingriffelement (123) umfasst; und
einen zweiten Flügel (130), der am Sockel (110) beweglich befestigt ist und ein zweites Eckeingriffende (133) umfasst,
wobei der erste und der zweite Flügel (120, 130) relativ zueinander aus einer kompakten Konfiguration, in der ein erster Abstand das erste und das zweite Eckeingriffende (123, 133) trennt, in eine Sicherungskonfiguration, in der ein zweiter, größerer Abstand das erste und das zweite Eckeingriffende (123, 133) trennt, bewegt werden können, und
wobei der erste und der zweite Flügel (120, 130) derart bemessen sind, dass sie mit der ersten bzw. der zweiten Innenraumecke (IC2, IC3) des vorderen Eckpfostens (30, 40) in Eingriff gelangen, wenn sie sich in der Sicherungskonfiguration befinden, und nicht, wenn sie sich in der kompakten Konfiguration befinden, und
wobei der Sockel (110) und der erste und der zweite Flügel (120, 130) derart bemessen sind, dass sie vollständig in den Lastsicherungsvorrichtungs-Aufnahmekanal (V) des vorderen Eckpfostens (30, 40) passen, wenn sich der erste und der zweite Flügel (120, 130) in der Sicherungskonfiguration befinden.

9. Lastsicherungsvorrichtung (100) nach Anspruch 8, wobei der Sockel (110) und der erste Flügel (120) zumindest teilweise eine erste Sicherungselement-Aufnahmeöffnung (105a) definieren, die derart bemessen ist, dass sie ein Sicherungselement (S) aufnimmt, wobei der Sockel (110) und der zweite Flügel (130) zumindest teilweise eine zweite Sicherungselement-Aufnahmeöffnung (105b) definieren, die derart bemessen ist, dass sie das Sicherungselement (S) aufnimmt.

10. Lastsicherungsvorrichtung (100) nach einem der Ansprüche 8 oder 9, wobei der erste und der zweite Flügel (120, 130) am Sockel (110) drehbar befestigt sind und konfiguriert sind, sich aus der kompakten Konfiguration in die Sicherungskonfiguration zu drehen, wobei ein erster Winkel zwischen dem ersten und dem zweiten Flügel (120, 130) gebildet wird, wenn sich der erste und der zweite Flügel (120, 130) in der kompakten Konfiguration befinden, und ein zweiter, größerer Winkel zwischen dem ersten und dem zweiten Flügel (120, 130) gebildet wird, wenn sich der erste und der zweite Flügel (120, 130) in der Sicherungskonfiguration befinden.

11. Lastsicherungsvorrichtung (100) nach Anspruch 10, wobei der zweite Winkel mindestens 90 Grad und nicht größer als 180 Grad ist.

12. Lastsicherungsvorrichtung (100) nach einem der Ansprüche 8-9, wobei der erste und der zweite Flügel (120, 130) relativ zum Sockel (110) translatorisch beweglich sind; und
wobei wahlweise der erste und der zweite Flügel (120, 130) komplanar sind, wenn sie sich in der kompakten Konfiguration befinden und wenn sie sich in der Sicherungskonfiguration befinden.

13. Lastsicherungsvorrichtung (100) nach Anspruch 12, wobei der Sockel (110) einen Körper mit gegenläufigen Gewindeabschnitten, die im ersten bzw. im zweiten Flügel (120, 130) schraubbar aufgenommen sind, umfasst, derart, dass eine Drehung des Sockels (110) relativ zum ersten und zweiten Flügel (120, 130): (1) in einer ersten Richtung bewirkt, dass sich der erste und der zweite Flügel (120, 130) translatorisch vom Sockel (110) weg und voneinander weg bewegen; und (2) in einer zweiten Richtung, die zur ersten Richtung entgegengesetzt ist, bewirkt, dass sich der erste und der zweite Flügel (120, 130) translatorisch zum Sockel (110) und zueinander bewegen.

14. Lastsicherungsvorrichtung (100) nach einem der Ansprüche 8-13, die ferner ein Vorbelastungselement umfasst, das mit dem ersten und dem zweiten Flügel (120, 130) funktionstechnisch verbunden ist und konfiguriert ist, den ersten und den zweiten Flügel (120, 130) in die Sicherungskonfiguration vorzubelasten;
wobei sie vorzugsweise ferner eine Rücklaufverhinderungsanordnung umfasst, die konfiguriert ist zu verhindern, dass sich der erste Flügel (120) zum Sockel (110) bewegt.

## Revendications

1. Processus d'immobilisation de charge pour immobiliser une charge (L) dans un conteneur d'expédition comprenant des premier et second montants d'angle avant (30, 40), le processus comprenant :
le positionnement d'un premier dispositif d'immobilisation de charge (100A) comprenant une base (110), une première aile (120) fixée de façon mobile à la base (110) et comprenant une première extrémité de prise d'angle (123), et une seconde aile (130) fixée de façon mobile à la base et comprenant une seconde extrémité de prise d'angle (133), les première et seconde ailes (120, 130) du premier dispositif d'immobilisation de charge (100A) étant mobiles l'une par rapport à l'autre entre une configuration compacte et une configuration d'immobilisation, au moins en partie à l'intérieur d'un canal de réception de dispositif d'immobilisation de charge (V) défini par le premier montant d'angle (30) lorsque les première et seconde ailes (120, 130) sont dans la configuration compacte ; et
l'immobilisation du premier dispositif d'immobilisation de charge (100A) sur le premier montant d'angle avant (30) par la manipulation des première et seconde ailes (120, 130) dans la configuration d'immobilisation de telle sorte que leurs premières et secondes extrémités de prise d'angle respectives (123, 133) viennent en prise avec des angles intérieurs opposés (IC2, IC3) du premier montant d'angle avant (30),
dans lequel la base (110) et les première et seconde ailes (120, 130) sont dimensionnées pour s'ajuster entièrement à l'intérieur du canal de réception de dispositif d'immobilisation de charge (V) du montant d'angle avant (30, 40) lorsque les première et seconde ailes (120, 130) sont dans la configuration d'immobilisation.

2. Processus d'immobilisation de charge selon la revendication 1, comprenant en outre :
le positionnement d'un second dispositif d'immobilisation de charge (100B) comprenant une base (110), une première aile (120) fixée de façon mobile à la base (110) et comprenant une première extrémité de prise d'angle (123), et une seconde aile (320) fixée de façon mobile à la base (110) et comprenant une seconde extrémité de prise d'angle (133), les première et seconde ailes (120, 130) du second dispositif d'immobilisation de charge (100B) étant mobiles l'une par rapport à l'autre entre une configuration compacte et une configuration d'immobilisation, au moins en partie à l'intérieur d'un canal de réception de dispositif d'immobilisation de charge (V) défini par le second montant d'angle (40) lorsque les première et seconde ailes (120, 130) sont dans la configuration compacte ;
l'immobilisation du second dispositif d'immobilisation de charge (100B) sur le second montant d'angle avant (40) par la manipulation des première et seconde ailes (120, 130) dans la configuration d'immobilisation de telle sorte que leurs premières et secondes extrémités de prise d'angle respectives (123, 133) viennent en prise avec des angles intérieurs opposés (IC2, IC3) du second montant d'angle avant (40) ;
la fixation d'un premier élément d'immobilisation (S1) sur le premier dispositif d'immobilisation de charge (100A) ;
la fixation d'un second élément d'immobilisation (S2) sur le second dispositif d'immobilisation de charge (100B) ;
l'enroulement des premier et second éléments d'immobilisation (S1, S2) autour de la charge (L) ; et
la fixation des premier et second éléments d'immobilisation (S1, S2) l'un à l'autre ; et
comprenant en outre de préférence la mise en tension des premier et second éléments d'immobilisation (S1, S2) autour de la charge (L).

3. Processus d'immobilisation de charge selon la revendication 1 ou 2, dans lequel la fixation d'un premier élément d'immobilisation (S1) sur le premier dispositif d'immobilisation de charge (100A) comprend :
le filetage d'une première extrémité du premier élément d'immobilisation (S1) à travers une première ouverture de réception d'élément d'immobilisation (105a) définie en partie par la première aile (120) ; et
le filetage de la première extrémité du premier élément d'immobilisation (S1) à travers une seconde ouverture de réception d'élément d'immobilisation (105b) définie en partie par la seconde aile (130) de façon à enrouler le premier élément de fixation (S1) autour de la base (110).

4. Processus d'immobilisation de charge selon l'une quelconque des revendications 1 à 3, dans lequel les première et seconde ailes (120, 130) sont fixées de façon pivotante à la base (110) de telle sorte que la manipulation des première et seconde ailes (120, 130) du premier dispositif d'immobilisation de charge (100A) dans la configuration d'immobilisation comprend le pivotement d'au moins l'une des première et seconde ailes (120, 130) autour de la base (110) pour séparer leurs premières et secondes extrémités de prise d'angle respectives (123, 133).

5. Processus d'immobilisation de charge selon l'une quelconque des revendications 1 à 4, comprenant en outre la manipulation des première et seconde ailes (120, 130) dans la configuration compacte avant l'insertion du premier dispositif d'immobilisation de charge (100A) au moins en partie à l'intérieur du canal de réception de dispositif d'immobilisation de charge (V) défini par le premier montant d'angle (30).

6. Processus d'immobilisation de charge selon l'une quelconque des revendications 1 à 5, dans lequel le premier dispositif d'immobilisation de charge (100A) comprend en outre un premier élément de sollicitation en prise fonctionnelle avec les première et seconde ailes (120, 130) et conçu pour solliciter les première et seconde ailes (120, 130) vers la configuration d'immobilisation de telle sorte que la manipulation des première et seconde ailes (120, 130) du premier dispositif d'immobilisation de charge (100A) dans la configuration d'immobilisation comprend l'activation du premier élément de sollicitation pour solliciter les première et seconde ailes (120, 130) dans la configuration d'immobilisation ;
dans lequel facultativement la manipulation des première et seconde ailes (120, 130) du premier dispositif d'immobilisation de charge (100A) dans la configuration compacte comprend le pivotement d'au moins l'une des première et seconde ailes (120, 130) autour de la base (110) et à l'encontre de la force de sollicitation du premier élément de sollicitation pour déplacer leurs premières et secondes extrémités de prise d'angle respectives (123, 133) l'une vers l'autre.

7. Processus d'immobilisation de charge selon l'une quelconque des revendications 1 à 3 et 5 à 6, dans lequel les première et seconde ailes (120, 130) sont mobiles en translation par rapport à à la base (110) de telle sorte que la manipulation des première et seconde ailes (120, 130) dans la configuration d'immobilisation comprend le déplacement d'au moins l'une des première et seconde ailes (120, 130) en translation par rapport à la base (110) pour séparer leurs premières et secondes extrémités de prise d'angle respectives (123, 133) ;
dans lequel facultativement la base (110) comprend un corps doté de parties filetées opposées qui sont reçues de façon filetée dans les première et seconde ailes (120, 130), respectivement, de telle sorte que la manipulation des première et seconde ailes (120, 130) dans la configuration d'immobilisation comprend la rotation de la base (110) par rapport aux première et seconde ailes (120, 130), ce qui entraîne le déplacement en translation des première et seconde ailes (120, 130) à distance de la base (110) et à distance l'une de l'autre.

8. Dispositif d'immobilisation de charge (100) pouvant être fixé à un montant d'angle avant (30, 40) d'un conteneur d'expédition, le montant d'angle avant (30, 40) comprenant de multiples parois définissant au moins en partie un canal de réception de dispositif d'immobilisation de charge (V) et formant des premier et second angles intérieurs opposés (IC2, IC3) du montant d'angle avant (30, 40), le dispositif d'immobilisation de charge (100) comprenant :
une base (110) ;
une première aile (120) fixée de façon mobile à la base (110) et comprenant une première extrémité de prise d'angle (123) ; et
une seconde aile (130) fixée de façon mobile à la base (110) et comprenant une seconde extrémité de prise d'angle (133),
dans lequel les première et seconde ailes (120, 130) sont mobiles l'une par rapport à l'autre entre une configuration compacte dans laquelle une première distance sépare les première et seconde extrémités de prise d'angle (123, 133) et une configuration d'immobilisation dans laquelle une seconde distance plus grande sépare les première et seconde extrémités de prise d'angle (123, 133), et
dans lequel les première et seconde ailes (120, 130) sont dimensionnées pour venir en prise avec les premier et second angles intérieurs (IC2, IC3) du montant d'angle avant (30, 40) respectivement, dans la configuration d'immobilisation et non dans la configuration compacte, et
dans lequel la base (110) et les première et seconde ailes (120, 130) sont dimensionnées pour s'ajuster entièrement à l'intérieur du canal de réception de dispositif d'immobilisation de charge (V) du montant d'angle avant (30, 40) lorsque les première et seconde ailes (120, 130) sont dans la configuration d'immobilisation.

9. Dispositif d'immobilisation de charge (100) selon la revendication 8, dans lequel la base (110) et la première aile (120) définissent au moins en partie une première ouverture de réception d'élément d'immobilisation (105a) dimensionnée pour recevoir un élément d'immobilisation (S), dans lequel la base (110) et la seconde aile (130) définissent au moins en partie une seconde ouverture de réception d'élément d'immobilisation (105b) dimensionnée pour recevoir l'élément d'immobilisation (S).

10. Dispositif d'immobilisation de charge (100) selon l'une quelconque des revendications 8 ou 9, dans lequel les première et seconde ailes (120, 130) sont fixées de façon pivotante à la base (110) et conçues pour pivoter de la configuration compacte à la configuration d'immobilisation, dans lequel un premier angle est formé entre les première et seconde ailes (120, 130) lorsque les première et seconde ailes (120, 130) sont dans la configuration compacte et un second angle plus grand est formé entre les première et seconde ailes (120, 130) lorsque les première et seconde ailes (120, 130) sont dans la configuration d'immobilisation.

11. Dispositif d'immobilisation de charge (100) selon la revendication 10, dans lequel le second angle est égal à au moins 90 degrés et n'est pas supérieur à 180 degrés.

12. Dispositif d'immobilisation de charge (100) selon l'une quelconque des revendications 8 ou 9, dans lequel les première et seconde ailes (120, 130) sont mobiles en translation par rapport à la base (110) ; et
dans lequel facultativement les première et seconde ailes (120, 130) sont coplanaires lorsqu'elles sont dans la configuration compacte et lorsqu'elles sont dans la configuration d'immobilisation.

13. Dispositif d'immobilisation de charge (100) selon la revendication 12, dans lequel la base (110) comprend un corps ayant des parties filetées opposées qui sont reçues par filetage dans les première et seconde ailes (120, 130) respectivement, de telle sorte que la rotation de la base (110) par rapport aux première et seconde ailes (120, 130) : (1) dans une première direction, amène les première et seconde ailes (120, 130) à se déplacer en translation à distance de la base (110) et à distance l'une de l'autre ; et (2) dans une seconde direction opposée à la première direction, amène les première et seconde ailes (120, 130) à se déplacer en translation vers la base (110) et l'une vers l'autre.

14. Dispositif d'immobilisation de charge (100) selon l'une quelconque des revendications 8 à 13, comprenant en outre un élément de sollicitation relié fonctionnellement aux première et seconde ailes (120, 130) et conçu pour solliciter les première et seconde ailes (120, 130) vers la configuration d'immobilisation ;
comprenant en outre de préférence un ensemble anti-rétraction conçu pour empêcher la première aile (120) de se déplacer vers la base (110).
